(19) Europäisches Patentamt
European Patent Office
Office européen des brevets

(11) **EP 3 148 241 B1**

(12) **EUROPEAN PATENT SPECIFICATION**

(45) Date of publication and mention
of the grant of the patent:
**25.03.2020 Bulletin 2020/13**

(51) Int Cl.:
***H04W 16/22*** *(2009.01)*      ***H04W 16/32*** *(2009.01)*
***H04W 16/18*** *(2009.01)*

(21) Application number: **14892639.7**

(86) International application number:
**PCT/CN2014/078034**

(22) Date of filing: **21.05.2014**

(87) International publication number:
**WO 2015/176258 (26.11.2015 Gazette 2015/47)**

(54) **CAPACITY EXPANSION METHOD AND DEVICE FOR WIRELESS NETWORK**

KAPAZITÄTSERWEITERUNGSVERFAHREN UND VORRICHTUNG FÜR DRAHTLOSES NETZWERK

PROCÉDÉ ET DISPOSITIF D'EXTENSION DE CAPACITÉ POUR RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.03.2017 Bulletin 2017/13**

(73) Proprietor: **Huawei Technologies Co. Ltd.**
**Shenzhen, Guangdong 518129 (CN)**

(72) Inventors:
• **SHMELKIN, Dmitri**
**Shenzhen**
**Guangdong 518129 (CN)**

• **ZHUANG, Hongcheng**
**Shenzhen**
**Guangdong 518129 (CN)**
• **YI, Youwen**
**Shenzhen**
**Guangdong 518129 (CN)**

(74) Representative: **Gill Jennings & Every LLP**
**The Broadgate Tower**
**20 Primrose Street**
**London EC2A 2ES (GB)**

(56) References cited:
WO-A1-2013/071771      CN-A- 101 494 871
CN-A- 102 547 752      CN-A- 103 476 041
CN-A- 103 702 337      US-A1- 2013 040 648

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention pertains to the field of wireless communications technologies, and specifically relates to a wireless network capacity expansion method and device.

**BACKGROUND**

As mobile service types keep increasing, there are increasing requirements imposed on a service transmission rate, and a capacity of a wireless network needs to be expanded to meet the ever-increasing requirements. Because available spectrum resources are limited, at present, a most effective network capacity expansion means is to add and deploy a micro cellular base station or a pico cellular base station (hereinafter referred to as a micro base station) based on an existing macro cellular base station (hereinafter referred to as a macro base station), so as to improve a network capacity by means of better spectrum reuse.

One important problem during networking of a heterogeneous network is how to deploy and configure a plurality of micro base stations based on an existing macro cellular network to construct a heterogeneous network including a plurality of macro base stations and micro base stations. At present, a macro base station is added to the macro cellular network by means of a drive test. However, this method is not applicable to deployment of micro base stations, because a quantity of newly-added micro base stations is much greater than that of macro base stations. The drive test method is time-consuming and effort-consuming. According to an existing micro base station deployment method, grid division is performed on a target region, and a grid in which a micro base station is deployed is determined aiming at a minimum average path loss from grids to micro base station covering the grids.

The document US2013/0040648 A1 discloses that a device identifies mobile devices within a geographical area associated with a carrier network. The device further divides the geographical area into cells. The device also collects network statistics associated with the mobile devices. The device assigns values to the cells based on the network statistics, and identifies locations in which to place the small cells within the geographical area based on the values.

However, the foregoing solution of determining the grid in which the micro base station is deployed aiming at the minimum average path loss is very likely to fail to ensure a network capacity after the micro base station is added.

**SUMMARY**

The present invention provides a wireless network capacity expansion method and device, so as to overcome a disadvantage in the prior art that it is difficult to ensure a network capacity after a micro base station is added.

Aspects of the invention are set out in the claims.

According to the wireless network capacity expansion method and device provided in the present invention, grid division is performed on a target region covered by a macro cellular network, to obtain a plurality of grids, and N first grids are determined among the plurality of grids based on a network gain, where the N first grids need to meet a condition: deploying one micro base station in each of the first grids brings a maximum network gain corresponding to the target region. A position of a grid in which a micro base station is deployed is determined based on the network gain, which optimizes a network capacity to a greatest extent when one micro base station is deployed in each grid of the determined N first grids.

**BRIEF DESCRIPTION OF DRAWINGS**

FIG. 1 is a flowchart of a wireless network capacity expansion method according to Embodiment 1 of the present invention;

FIG. 2 is a flowchart of a wireless network capacity expansion method according to Embodiment 2 of the present invention;

FIG. 3 is a flowchart of a multi-iteration process in Embodiment 2 shown in FIG. 2;

FIG. 4 is a schematic structural diagram of a wireless network capacity expansion device according to Embodiment 3 of the present invention;

FIG. 5 is a schematic structural diagram of a wireless network capacity expansion device according to Embodiment 4 of the present invention; and

FIG. 6 is a schematic structural diagram of a network device according to Embodiment 5 of the present invention.

**DESCRIPTION OF EMBODIMENTS**

To make the objectives, technical solutions, and advantages of embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

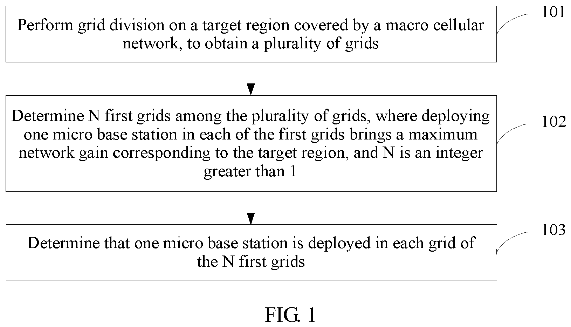

FIG. 1 is a flowchart of a wireless network capacity expansion method according to Embodiment 1 of the present invention. As shown in FIG. 1, the method provided in this embodiment is particularly applicable to any scenario in which a network capacity is expanded by adding and deploying a micro base station on a wireless communications network, and is particularly applicable to a mobile cellular network. Different types of micro base stations may be deployed in different wireless networks. For example, a micro base station deployed in the mobile cellular network may be a small cell or an access point. In addition, the method may be executed by a network side device. For example, the device is on a management platform of an operator, or in an operation and maintenance center (Operation and Maintenance Center, OMC for short). The method specifically includes:

Step 101: Perform grid division on a target region covered by a macro cellular network, to obtain a plurality of grids.
Step 102: Determine N first grids among the plurality of grids, where deploying one micro base station in each of the first grids brings a maximum network gain corresponding to the target region, and N is an integer greater than 1.
Step 103: Determine that one micro base station is deployed in each first grid of the N first grids.

In this embodiment, grid division is first performed on the target region covered by the macro cellular network, to obtain the plurality of grids. It can be understood that the target region covered by the macro cellular network includes a plurality of macro base stations, and each macro base station covers an area, that is, each macro base station covers a plurality of grids.

To implement network capacity expansion, in a solution provided in this embodiment, while a basic requirement for a network coverage of the target region is met, at least one group of N first grids needs to be determined among the plurality of grids obtained by means of gridding, for example, M (M is an integer greater than or equal to 1) groups of N first grids. That is, there are totally M groups, and each group includes N first grids. Deploying one micro base station in each grid of the M*N first grids brings a maximum network capacity of the target region. That is, each group of N first grids in this embodiment needs to meet a condition: deploying one micro base station in each first grid brings the maximum network gain corresponding to the target region. The network gain may include a network capacity gain and a network coverage gain. In this embodiment, the network capacity gain represents an optimization degree of the network capacity of the target region, and the network coverage gain represents an optimization degree of network coverage of the target region, that is, a degree to which coverage vulnerability is caused by interference caused by a newly-added micro base station to a user. A greater network coverage gain indicates a lower degree to which coverage vulnerability is caused by the interference caused by the newly-added micro base station to the user. In this embodiment, optionally, the network gain is maximum means that the network capacity gain is maximum while a requirement for the network coverage gain is met.

The N first grids meeting the foregoing condition are determined among the plurality of grids obtained by gridding the target region. For example, the N first grids may be determined in the following manner. It is assumed that A grids are obtained by means of gridding, N grids are randomly selected from the A grids each time, and the network gain: the network capacity gain and the network coverage gain, that are brought about if one micro base station is deployed in each of the N randomly selected grids is determined by analogy, until all possibilities of random selection are tried; then, the network gains corresponding to all random selections are compared, N grids corresponding to a random selection with a greatest network gain is determined, and one micro base station is deployed in each of the N grids. Optionally, the foregoing process is repeated for multiple times, so as to finally determine a plurality of groups of N first grids, and micro base stations are deployed in the plurality of groups of N first grids, so as to implement network capacity expansion. Optional implementation manners are described in the following other embodiments.

In this embodiment, grid division is performed on a target region covered by a macro cellular network, to obtain a plurality of grids, and based on a network gain including a network capacity gain and a network coverage gain, N first grids are determined among the plurality of grids, where the N first grids need to meet a condition: deploying one micro base station in each of the first grids brings a maximum network gain corresponding to the target region. A position of a grid in which a micro base station is deployed is determined based on the network gain, which optimizes a network capacity when a coverage requirement is met.

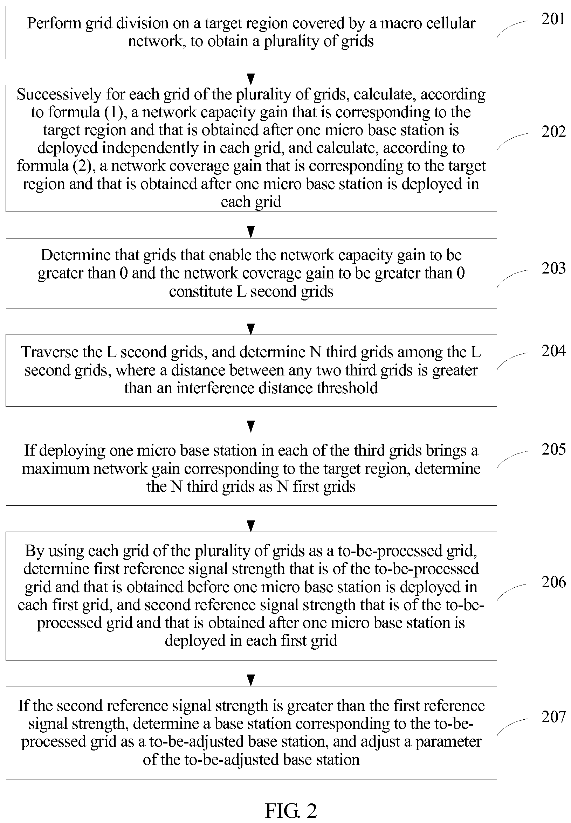

FIG. 2 is a flowchart of a wireless network capacity expansion method according to Embodiment 2 of the present invention. As shown in FIG. 2, the method includes:

Step 201: Perform grid division on a target region covered by a macro cellular network, to obtain a plurality of grids.

In this embodiment, after the grid division is performed on the target region covered by the macro cellular network and the plurality of grids are obtained, N first grids need to be determined among the plurality of grids, which may be specifically implemented by using the following process:

determining L second grids among the plurality of grids, where deploying one micro base station in each of the second grids increases a network gain corresponding to the target region, and L is an integer greater than N; and determining the N first grids among the L second grids.

In this embodiment, to reduce a calculation amount and enable an accurate result, the L second grids are first selected from the plurality of grids obtained by means of gridding, and the L second grids need to meet a condition: deploying one micro base station in each of the second grids increases a network gain corresponding to the target region, that is, a network capacity gain and a network coverage gain are increased, which is specifically implemented by using the following steps:

Step 202: Successively for each grid of the plurality of grids, calculate, according to formula (1), a network capacity gain that is corresponding to the target region and that is obtained after one micro base station is deployed independently in each grid, and calculate, according to formula (2), a network coverage gain that is corresponding to the target region and that is obtained after one micro base station is deployed in each grid:

$$U_1(p) = Capacity(S \cup p) - Capacity(S) \qquad (1)$$

$$U_2(p) = Coverage(S \cup p) - Coverage(S) \qquad (2)$$

where $U_1(p)$ is the network capacity gain that is corresponding to the target region and that is obtained after one micro base station is deployed in any grid $p$ in the plurality of grids, $U_2(p)$ is the network capacity gain that is corresponding to the target region and that is obtained after one micro base station is deployed in any grid $p$ in the plurality of grids, $S$ is a set of macro base stations included in the target region, $Capacity(S)$ is a network capacity that is of the target region and that is obtained before a micro base station is deployed, and is determined according to formula (3), $Capacity(S \cup p)$ is a network capacity that is of the target region and that is is obtained after one micro base station is deployed in the grid $p$, and is determined according to $Capacity(S \cup p) = \sum_{c' \in (S \cup p)} T_{c'}$ that is:

$$Capacity(S \cup p) = \sum_{c' \in (S \cup p)} T_{c'} = \sum_{c' \in (S \cup p)} \frac{W \sum_{i \in c'} T_i}{\sum_{i \in c'} T_i \log_2^{-1}(1 + \gamma_i^{RS})} \; ;$$

$Coverage(S)$ is a network coverage area that is of the target region and that is obtained before a micro base station is deployed, and is determined according to formula (4), and $Coverage(S \cup p)$ is a network coverage area that is of the target region and that is obtained after one micro base station is deployed in the grid $p$, and is determined according to

$Coverage(S \cup p) = \sum_{c' \in (S \cup p)} F_{c'}$ that is:

$$Coverage(S \cup p) = \sum_{c' \in (S \cup p)} F_{c'} = (\sum_{c' \in (S \cup p)} \frac{\sum_{i \in c', RS_i > RS_{min}} T_i}{\sum_{i \in c'} T_p} + \sum_{c \in S} \frac{\sum_{i \in c', \gamma_i^{RS} > \gamma_{min}} T_i}{\sum_{i \in c'} T_i}) / 2$$

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Coverage(S) = \sum_{c \in S} F_c = (\sum_{c \in S} \frac{\sum_{i \in c, RS_i > RS_{\min}} T_i}{\sum_{i \in c} T_i} + \sum_{c \in S} \frac{\sum_{i \in c, \gamma_i^{RS} > \gamma_{\min}} T_i}{\sum_{i \in c} T_i}) / 2 \qquad (4)$$

where $T_c$ is a network capacity corresponding to any base station $c$ in the set $S$, $F_c$ is a network coverage area of any base station $c$ in the set $S$, $W$ is network bandwidth, $T_i$ is a traffic volume of any grid $i$ within the coverage area of the base station $c$, $\gamma_i^{RS}$ is a signal-to-noise ratio of a reference signal corresponding to the grid $i$ and is determined according to formula (5), $\gamma_{\min}$ is a signal-to-noise ratio threshold of the reference signal, $RS_i$ is reference signal strength of the grid $i$ and is determined by $P_c g_i^c$, and $RS_{\min}$ is a signal strength threshold of the reference signal:

$$\gamma_i^{RS} = \frac{P_c g_i^c}{P_{noise} + \sum_{d \neq c, d \in S} P_d g_i^d} \qquad (5)$$

where $P_{noise}$ is a noise power, $P_c$ is a transmit power of the base station $c$, $P_d$ is a transmit power of any base station $d$, different from the base station $c$, in the set $S$, and $g_i^c$ and $g_i^d$ are respectively a channel gain from the base station $c$ to the grid $i$ and a channel gain from the base station $d$ to the grid $i$.

Step 203: Determine that grids that enable the network capacity gain to be greater than 0 and the network coverage gain to be greater than 0 constitute the L second grids.

Further, that the N first grids are determined among the L second grids includes:

Step 204: Traverse the L second grids, and determine N third grids among the L second grids, where a distance between any two third grids is greater than an interference distance threshold.

Step 205: Determine the N third grids as the N first grids if deploying one micro base station in each of the third grids brings a maximum network gain corresponding to the target region.

In this embodiment, to ensure that deploying micro base stations in the selected and determined N first grids causes no interference between the micro base stations or between a micro base station and a macro base station, the following condition needs to be met: it is assumed that micro base stations are deployed in any two second grids in the L second grids, interference between the any two grids is less than a preset interference threshold. A distance between grids that meets the condition is defined as the interference distance threshold, and the interference distance threshold is used as a parameter for subsequently selecting and determining the N first grids.

The interference distance threshold in this embodiment is determined in the following manner: determining interference between any two of the L second grids according to formula (6):

$$I_{ij} = 1 - U_1\{l_i, l_j\} / (U_1(l_i) + U_1(l_j)) \qquad (6)$$

where $l_i$ and $l_j$ are the any two second grids, $I_{ij}$ is the interference, $U_1\{l_i, l_j\}$ is a network capacity gain that is of the target network and that is obtained after one micro base station is deployed in each of the second grids $l_i$ and $l_j$ simultaneously, $U_1(l_i)$ is a network capacity gain that is of the target network and that is obtained after one micro base station is deployed in the second grid $l_i$, and $U_1(l_j)$ is a network capacity gain that is of the target network and that is obtained after one micro base station is deployed in the second grid $l_j$; and determining a distance between grids that enables the interference to be less than the preset interference threshold as the interference distance threshold.

Specifically, in this embodiment, a process of determining at least one group of N first grids among the L second grids is a multi-iteration process, and each iteration results in one group of N first grids. When a preset iteration termination condition is met, iteration ends, at least one group of N first grids is finally obtained, and one micro base station is deployed in each of the at least one group of N first grids. The iteration termination condition includes: a quantity of iterations reaches a preset quantity of times, or a difference between network gains corresponding to two adjacent groups of N first grids that are obtained by means of iteration is less than a preset difference.

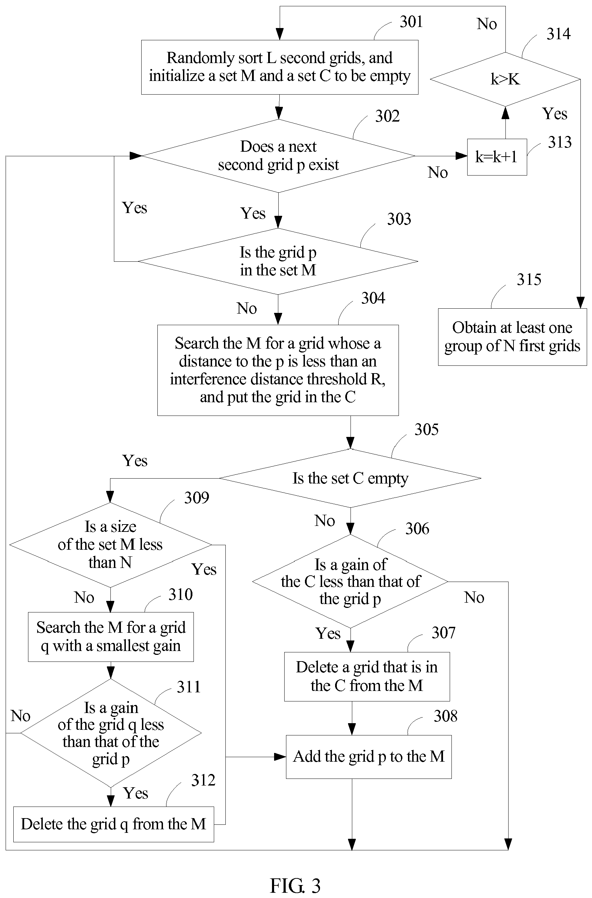

In this embodiment, only a process of one traverse is used as an example for brief description, and a detailed multi-iteration process is described in detail in an embodiment shown in FIG. 3. One traverse specifically includes the following steps:

randomly sort the L second grids;
traverse the L second grids, and determine the N third grids among the L second grids, where a distance between any two third grids is greater than the interference distance threshold;
determine whether deploying one micro base station in each of the third grids brings the maximum network gain corresponding to the target region, and if deploying one micro base station in each of the third grids does not bring the maximum network gain corresponding to the target region, execute a next step, or if deploying one micro base station in each of the third grids does not bring the maximum network gain corresponding to the target region, the process ends; and
determine the N third grids as one group of the N first grids.

In this embodiment, to eliminate impact of a grid selection sequence on a final determining result as much as possible, in each iteration, the L second grids are first sorted randomly; then, the L second grids are traversed, and the N third grids are selected from the L second grids, where a distance between any two third grids is greater than the interference distance threshold; and whether deploying one micro base station in each of the third grids brings the maximum network gain corresponding to the target region is determined, and if deploying one micro base station in each of the third grids brings the maximum network gain corresponding to the target region, the N third grids are determined as the N first grids.

In this embodiment, firstly, L second grids that can be used as candidate grids for deploying micro base stations are determined among a plurality of grids obtained from an original gridded target region, and then, at least one group of N first grids is determined among the L second grids and is used as final grids for deploying the micro base stations, thereby not only further reducing calculation amount, but also ensuring an accurate determining result, which facilitates optimization of a network capacity and network coverage.

In this embodiment, after at least one group of N first grids for deploying micro base stations is selected and determined, optionally, to further optimize the network gain of the target region, parameters of a newly-added micro base station and an existing macro base station may be adjusted, and a specific adjustment process is as follows:

Step 206: By using each grid of the plurality of grids as a to-be-processed grid, determine first reference signal strength that is of the to-be-processed grid and that is obtained before one micro base station is deployed in each of the first grids, and second reference signal strength that is of the to-be-processed grid and that is obtained after one micro base station is deployed in each of the first grids.
Step 207: If the second reference signal strength is greater than the first reference signal strength, determine a base station corresponding to the to-be-processed grid as a to-be-adjusted base station, and adjust a parameter of the to-be-adjusted base station.

In this embodiment, each grid of the plurality of grids obtained after the target region is gridded is used as a to-be-processed grid. It is assumed that before a micro base station is deployed, a to-be-processed grid $i$ is associated with a macro base station $c$, that is, the to-be-processed grid $i$ is covered by the macro base station $c$, and it can be determined that first reference signal strength $RS_i$ of the macro base station $c$ in the to-be-processed grid $i$ is determined by $P_c g_i^c$. After a micro base station is deployed in each first grid, the to-be-processed grid $i$ may be no longer associated with the macro base station $c$, and may be associated with a micro base station $c'$, that is, the to-be-processed grid $i$ is covered by the micro base station $c'$. In this case, it can be determined that second reference signal strength $RS_i$ of the micro base station $c'$ in the to-be-processed grid $i$ is determined by $P_{c'} g_i^{c'}$. Further, if the second reference signal strength is greater than the first reference signal strength, it is considered that the micro base station $c'$ that the to-be-processed grid $i$ is associated with is a to-be-adjusted base station, and a parameter of the to-be-adjusted base station *c'* needs to be adjusted. Preferably, when whether the second reference signal strength is greater than the first reference signal strength is being determined, the second reference signal strength is generally compared with a product of the first reference signal strength and a sensitivity coefficient.

Further, when the parameter of the to-be-adjusted base station is being adjusted, a to-be-adjusted parameter includes a transmit power and/or an antenna downtilt. Specifically, the transmit power of the to-be-adjusted base station is adjusted according to a first preset step; or the antenna downtilt of the to-be-adjusted base station is adjusted according to a second preset step. Generally, the foregoing adjustment process is performed time by time, that is, each adjustment is performed according to the preset steps, and after each adjustment, whether a network capacity gain of the target region after each adjustment is greater than 0 needs to be determined, next adjustment is performed if the network capacity gain is greater than 0, and so on, and adjusting the to-be-adjusted base station ends when the network capacity gain is not greater than 0. Using transmit power adjustment as an example, a transmit power range is configured for each to-be-adjusted base station, and adjustment is performed time by time by using the first preset step as a unit within the range. After each adjustment, whether the network capacity gain of the target region after each adjustment is increased is determined, and if the network capacity gain is increased, next adjustment is performed until the network capacity gain is no longer increased. A transmit power obtained after a final adjustment is used as the transmit power of the to-be-adjusted base station. The antenna downtilt is adjusted in a similar manner.

FIG. 3 is a flowchart of a multi-iteration process in Embodiment 2 shown in FIG. 2, and as shown in FIG. 3:

Step 301: Randomly sort L second grids, and initialize a set M and a set C to be empty.

Step 302: Determine whether a next second grid p exists, and if the next second grid p exists, execute step 303, or if the next second grid p does not exist, execute step 313.

Step 303: Determine whether the grid p is in the set M, and if the grid p is not in the set M, execute step 304, or if the grid p is in the set M, execute step 302.

Step 304: Search the M for a grid whose distance to the grid p is less than an interference distance threshold R, and put the grid in the C.

Step 305: Determine whether the set C is empty, and if the set C is not empty, execute step 306, or if the set C is empty, execute step 309.

Step 306: Determine whether a gain of the set C is less than that of the grid p, and if the gain of the set C is less than that of the grid p, execute step 307, or if the gain of the set C is not less than that of the grid p, execute step 302.

Step 307: Delete a grid that is in the set C from the set M.

Step 308: Add the grid p to the set M.

Step 309: Determine whether a size of the set M is smaller than N, and if the size of the set M is smaller than N, execute step 308, or if the size of the set M is not smaller than N, execute step 310.

Step 310: Search the set M for a grid q with a smallest gain.

Step 311: Determine whether the gain of the grid q is less than that of the grid p, and if the gain of the grid q is less than that of the grid p, execute step 312, or if the gain of the grid q is not less than that of the grid p, execute step 302.

Step 312: Delete the grid q from the set M.

Step 313: k=k+1.

Step 314: Determine whether k is greater than a preset quantity K of times, and if k is greater than the preset quantity of times K, execute step 301, or if k is not greater than the preset quantity of times K, execute step 315.

Optionally, besides that a quantity k of iterations reaches a preset quantity K of times, an iteration termination condition may also be that a network gain difference between two groups of N first grids of two adjacent iteration results is less than a preset threshold.

Step 315: Obtain at least one group of N first grids.

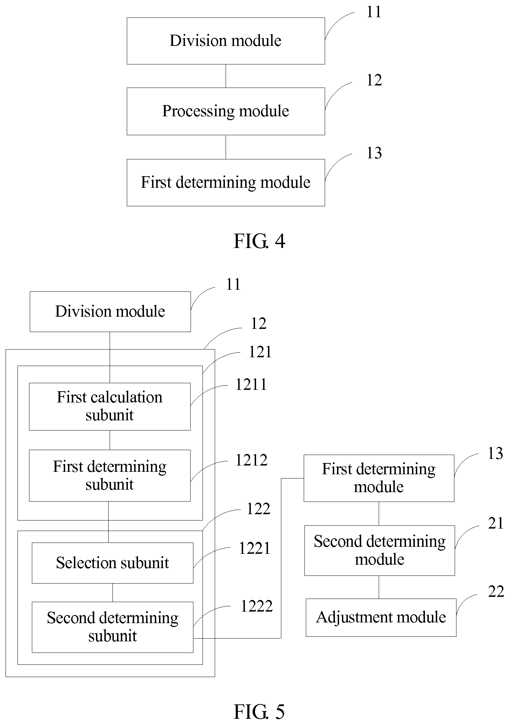

FIG. 4 is a schematic structural diagram of a wireless network capacity expansion device according to Embodiment 3 of the present invention. As shown in FIG. 4, the device includes:

a division module 11, configured to perform grid division on a target region covered by a macro cellular network, to obtain a plurality of grids;

a processing module 12, configured to determine N first grids among the plurality of grids, where deploying one micro base station in each of the first grids brings a maximum network gain corresponding to the target region, and N is an integer greater than 1; and

a first determining module 13, configured to determine, according to the N first grids determined by the processing module, that one micro base station is deployed in each of the N first grids.

The device in this embodiment may be configured to execute a technical solution of the method embodiment shown in FIG. 1, and implementation principles and technical effects thereof are similar, and details are not described herein again.

FIG. 5 is a schematic structural diagram of a wireless network capacity expansion device according to Embodiment 4 of the present invention. As shown in FIG. 5, the device in this embodiment is based on the embodiment shown in FIG. 4, and the processing module 12 includes:

a first processing unit 121, configured to determine L second grids among the plurality of grids, where deploying one micro base station in each of the second grids increases a network gain corresponding to the target region, and L is an integer greater than N; and

a second processing unit 122, configured to determine the N first grids among the L second grids.

Further, the first processing unit 121 includes:

a first calculation subunit 1211, configured to: successively for each grid of the plurality of grids, calculate, according to formula (1), a network capacity gain that is corresponding to the target region and that is obtained after one micro base station is deployed independently in each grid, and calculate, according to formula (2), a network coverage gain that is corresponding to the target region and that is obtained after one micro base station is deployed in each grid:

$$U_1(p) = Capacity(S \cup p) - Capacity(S) \qquad (1)$$

$$U_2(p) = Coverage(S \cup p) - Coverage(S) \qquad (2)$$

where $U_1(p)$ is the network capacity gain that is corresponding to the target region and that is obtained after one micro base station is deployed in any grid $p$ in the plurality of grids, $U_2(p)$ is the network coverage gain that is corresponding to the target region and that is obtained after one micro base station is deployed in any grid $p$ in the plurality of grids, $S$ is a set of macro base stations included in the target region, $Capacity(S)$ is a network capacity that is of the target region and that is obtained before a micro base station is deployed, and is determined according to formula (3), $Capacity(S \cup p)$ is a network capacity that is of the target region and that is obtained after one micro base station is deployed in the grid

$p$, and is determined according to $Capacity(S \cup p) = \sum\limits_{c' \in (S \cup p)} T_{c'}$, $Coverage(S)$ is a network coverage area that is of the target region and that is obtained before a micro base station is deployed, and is determined according to formula (4), and $Coverage(S \cup p)$ is a network coverage area that is of the target region and that is obtained after one micro base station is deployed in the grid $p$, and is determined according to $Coverage(S \cup p) = \sum\limits_{c' \in (S \cup p)} F_{c'}$ :

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Coverage(S) = \sum_{c \in S} F_c = (\sum_{c \in S} \frac{\sum_{i \in c, RS_i > RS_{\min}} T_i}{\sum_{i \in c} T_i} + \sum_{c \in S} \frac{\sum_{i \in c, \gamma_i^{RS} > \gamma_{\min}} T_i}{\sum_{i \in c} T_i}) / 2 \qquad (4)$$

where $T_c$ is a network capacity corresponding to any base station c in the set $S$, $F_c$ is a network coverage area of any base station $c$ in the set $S$, $W$ is network bandwidth, $T_i$ is a traffic volume of any grid $i$ within the coverage area of the base station $c$, $\gamma_i^{RS}$ is a signal-to-noise ratio of a reference signal corresponding to the grid $i$ and is determined according to formula (5), $\gamma_{\min}$ is a signal-to-noise ratio threshold of the reference signal, $RS_i$ is reference signal strength of the grid $i$ and is determined by $P_c g_i^c$, and $RS_{\min}$ is a signal strength threshold of the reference signal:

$$\gamma_i^{RS} = \frac{P_c g_i^c}{P_{noise} + \sum_{d \neq c, d \in S} P_d g_i^d} \tag{5}$$

where $P_{noise}$ is a noise power, $P_c$ is a transmit power of the base station $c$, $P_d$ is a transmit power of any base station $d$, different from the base station $c$, in the set $S$, and $g_i^c$ and $g_i^d$ are respectively a channel gain from the base station $c$ to the grid $i$ and a channel gain from the base station $d$ to the grid $i$; and
a first determining subunit 1212, configured to determine that grids that enable the network capacity gain to be greater than 0 and the network coverage gain to be greater than 0 constitute the L second grids.

Further, the second processing unit 122 specifically includes:

a selection subunit 1221, configured to traverse the L second grids, and determine N third grids among the L second grids, where a distance between any two third grids is greater than an interference distance threshold; and
a second determining subunit 1222, configured to determine the N third grids as the N first grids if deploying one micro base station in each of the third grids brings the maximum network gain corresponding to the target region.

Specifically, the selection subunit 1221 is specifically configured to:

determine interference between any two of the L second grids according to formula (6):

$$I_{ij} = 1 - U_1\{l_i, l_j\} / (U_1(l_i) + U_1(l_j)) \tag{6}$$

where $l_i$ and $l_j$ are the any two second grids, $I_{ij}$ is the interference, $U_1\{l_i, l_j\}$ is a network capacity gain that is of the target network and that is obtained after one micro base station is deployed in each of the second grids $l_i$ and $l_j$ simultaneously, $U_1(l_i)$ is a network capacity gain that is of the target network and that is obtained after one micro base station is deployed in the second grid $l_i$, and $U_1(l_j)$ is a network capacity gain that is of the target network and that is obtained after one micro base station is deployed in the second grid $l_j$; and
determine a distance between grids that enables the interference to be less than a preset interference threshold as the interference distance threshold.

Further, the device further includes:

a second determining module 21, configured to: by using each grid of the plurality of grids as a to-be-processed grid, determine first reference signal strength that is of the to-be-processed grid and that is obtained before one micro base station is deployed in each of the first grids, and second reference signal strength that is of the to-be-processed grid and that is obtained after one micro base station is deployed in each of the first grids; and
an adjustment module 22, configured to: if the second reference signal strength is greater than the first reference signal strength, determine a base station corresponding to the to-be-processed grid as a to-be-adjusted base station, and adjust a parameter of the to-be-adjusted base station.

Specifically, the adjustment module 22 is specifically configured to:
adjust a transmit power of the to-be-adjusted base station according to a first preset step; or adjust an antenna downtilt of the to-be-adjusted base station according to a second preset step.
The device in this embodiment may be configured to execute technical solutions of the method embodiments shown in FIG. 2 and FIG. 3, and implementation principles and technical effects thereof are similar, and details are not described herein again.

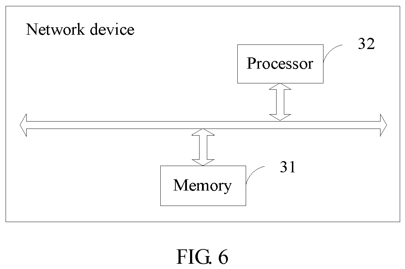

FIG. 6 is a schematic structural diagram of a network device according to Embodiment 5 of the present invention. As shown in FIG. 6, the network device includes:
a memory 31 and a processor 32 connected to the memory 31, where the memory 31 is configured to store a set of program code, and the processor 32 is configured to invoke the program code stored in the memory 31 to execute steps in the wireless network capacity expansion method shown in FIG. 1: perform grid division on a target region covered by a macro cellular network, to obtain a plurality of grids; determine N first grids among the plurality of grids, where deploying one micro base station in each of the first grids brings a maximum network gain corresponding to the target region, and N is an integer greater than 1; and determine that one micro base station is deployed in each of the N first grids.

Further, the processor 32 is further configured to: determine L second grids among the plurality of grids, where deploying one micro base station in each of the second grids increases a network gain corresponding to the target region, and L is an integer greater than N; and determine the N first grids among the L second grids.

Further, the processor 32 is further configured to: successively for each grid of the plurality of grids, calculate, according to formula (1), a network capacity gain that is corresponding to the target region and that is obtained after one micro base station is deployed independently in each grid, and calculate, according to formula (2), a network coverage gain that is corresponding to the target region and that is obtained after one micro base station is deployed in each grid:

$$U_1(p) = Capacity(S \cup p) - Capacity(S) \tag{1}$$

$$U_2(p) = Coverage(S \cup p) - Coverage(S) \tag{2}$$

where $U_1(p)$ is the network capacity gain that is corresponding to the target region and that is obtained after one micro base station is deployed in any grid $p$ in the plurality of grids, $U_2(p)$ is the network coverage gain that is corresponding to the target region and that is obtained after one micro base station is deployed in any grid $p$ in the plurality of grids, $S$ is a set of macro base stations included in the target region, $Capacity(S)$ is a network capacity that is of the target region and that is obtained before a micro base station is deployed, and is determined according to formula (3), $Capacity(S \cup p)$ is a network capacity that is of the target region and that is obtained after one micro base station is deployed in the grid $p$, and is determined according to $Capacity(S \cup p) = \sum_{c' \in (S \cup p)} T_{c'}$, $Coverage(S)$ is a network coverage area that is of the target region and that is obtained before a micro base station is deployed, and is determined according to formula (4), and $Coverage(S \cup p)$ is a network coverage area that is of the target region and that is obtained after one micro base station is deployed in the grid $p$, and is determined according to $Coverage(S \cup p) = \sum_{c' \in (S \cup p)} F_{c'}$:

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \tag{3}$$

$$Coverage(S) = \sum_{c \in S} F_c = (\sum_{c \in S} \frac{\sum_{i \in c, RS_i > RS_{min}} T_i}{\sum_{i \in c} T_i} + \sum_{c \in S} \frac{\sum_{i \in c, \gamma_i^{RS} > \gamma_{min}} T_i}{\sum_{i \in c} T_i}) / 2 \tag{4}$$

where $T_c$ is a network capacity corresponding to any base station $c$ in the set $S$, $F_c$ is a network coverage area of any base station $c$ in the set $S$, $W$ is network bandwidth, $T_i$ is a traffic volume of any grid $i$ within the coverage area of the base station $c$, $\gamma_i^{RS}$ is a signal-to-noise ratio of a reference signal corresponding to the grid $i$ and is determined according to formula (5), $\gamma_{min}$ is a signal-to-noise ratio threshold of the reference signal, $RS_i$ is reference signal strength of the grid $i$ and is determined by $P_c g_i^c$, and $RS_{min}$ is a signal strength threshold of the reference signal:

$$\gamma_i^{RS} = \frac{P_c g_i^c}{P_{noise} + \sum_{d \neq c, d \in S} P_d g_i^d} \tag{5}$$

where $P_{noise}$ is a noise power, $P_c$ is a transmit power of the base station $c$, $P_d$ is a transmit power of any base station *d*, different from the base station *c*, in the set *S*, and $g_i^c$ and $g_i^d$ are respectively a channel gain from the base station *c* to the grid *i* and a channel gain from the base station d to the grid *i*; and

determine that grids that enable the network capacity gain to be greater than 0 and the network coverage gain to be greater than 0 constitute the L second grids.

Further, the processor 32 is further configured to traverse the L second grids, and determine N third grids among the L second grids, where a distance between any two third grids is greater than an interference distance threshold; and determine the N third grids as the N first grids if deploying one micro base station in each of the third grids brings the maximum network gain corresponding to the target region.

Further, the processor 32 is further configured to: determine interference between any two of the L second grids according to formula (6):

$$I_{ij} = 1 - U_1\{l_i, l_j\}/(U_1(l_i) + U_1(l_j)) \qquad (6)$$

where $l_i$ and $l_j$ are the any two second grids, $I_{ij}$ is the interference, $U_1\{l_i, l_j\}$ is a network capacity gain that is of the target network and that is obtained after one micro base station is deployed in each of the second grids $l_i$ and $l_j$ simultaneously, $U_1(l_i)$ is a network capacity gain that is of the target network and that is obtained after one micro base station is deployed in the second grid $l_i$, and $U_1(l_j)$ is a network capacity gain that is of the target network and that is obtained after one micro base station is deployed in the second grid $l_j$; and

determine a distance between grids that enables the interference to be less than a preset interference threshold as the interference distance threshold.

Further, the processor 32 is further configured to: by using each grid of the plurality of grids as a to-be-processed grid, determine first reference signal strength that is of the to-be-processed grid and that is obtained before one micro base station is deployed in each of the first grids, and second reference signal strength that is of the to-be-processed grid and that is obtained after one micro base station is deployed in each of the first grids; and if the second reference signal strength is greater than the first reference signal strength, determine a base station corresponding to the to-be-processed grid as a to-be-adjusted base station, and adjust a parameter of the to-be-adjusted base station.

Further, the processor 32 is further configured to adjust a transmit power of the to-be-adjusted base station according to a first preset step; or adjust an antenna downtilt of the to-be-adjusted base station according to a second preset step.

Persons of ordinary skill in the art may understand that all or a part of the steps of the foregoing method embodiments may be implemented by a program instructing relevant hardware. The previous program may be stored in a computer readable storage medium. When the program is run, the steps of the foregoing method embodiments are performed. The previous storage medium includes various mediums that are capable of storing the program code, such as a ROM, a RAM, a magnetic disk, or an optical disc.

**Claims**

1. A wireless network capacity expansion method, comprising:

    performing grid division on a target region covered by a macro cellular network, to obtain a plurality of grids;
    determining N first grids among the plurality of grids, wherein deploying one micro base station in each of the first grids brings a maximum network gain corresponding to the target region, and N is an integer greater than 1; and
    determining that one micro base station is deployed in each of the N first grids;
    **characterized in that** the determining the N first grids among the plurality of grids comprises:

    determining L second grids among the plurality of grids, wherein deploying one micro base station in each of the second grids increases a network gain corresponding to the target region, and L is an integer greater than N; and
    determining the N first grids among the L second grids;

    wherein the determining the L second grids among the plurality of grids comprises:
    successively for each grid of the plurality of grids, calculating, according to formula (1), a network capacity gain that is corresponding to the target region and that is obtained after one micro base station is deployed independently in each grid, and calculating, according to formula (2), a network coverage gain that is corresponding to the target region and that is obtained after one micro base station is deployed in each grid:

$$U_1(p) = Capacity(S \cup p) - Capacity(S) \qquad (1)$$

$$U_2(p) = Coverage(S \cup p) - Coverage(S) \qquad (2)$$

wherein $U_1(p)$ is a network capacity gain that is corresponding to the target region and that is obtained after one micro base station is deployed in any grid $p$ in the plurality of grids, $U_2(p)$ is a network coverage gain that is corresponding to the target region and that is obtained after one micro base station is deployed in any grid $p$ in the plurality of grids, $S$ is a set of macro base stations comprised in the target region, $Capacity(S)$ is a network capacity that is of the target region and that is obtained before a micro base station is deployed, and is determined according to formula (3), $Capacity(S \cup p)$ is a network capacity that is of the target region and that is obtained after one micro base station is deployed in the grid $p$, and is determined according to

$$Capacity(S \cup p) = \sum_{c \in (S \cup p)} T_c$$
, $Coverage(S)$ is a network coverage area that is of the target region and that is obtained before a micro base station is deployed, and is determined according to formula (4), and $Coverage(S \cup p)$ is a network coverage area that is of the target region and that is obtained after one micro base station is deployed in the grid $p$, and is determined according to $$Coverage(S \cup p) = \sum_{c \in (S \cup p)} F_c$$ :

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Coverage(S) = \sum_{c \in S} F_c = \left( \sum_{c \in S} \frac{\sum_{i \in c, RS_i > RS_{\min}} T_i}{\sum_{i \in c} T_i} + \sum_{c \in S} \frac{\sum_{i \in c, \gamma_i^{RS} > \gamma_{\min}} T_i}{\sum_{i \in c} T_i} \right) / 2 \qquad (4)$$

wherein $T_c$ is a network capacity corresponding to any base station $c$ in the set $S$, $F_c$ is a network coverage area of the base station $c$ in the set $S$, $W$ is network bandwidth, $T_i$ is a traffic volume of any grid $i$ within the coverage area of the base station $c$, $\gamma_i^{RS}$ is a signal-to-noise ratio of a reference signal corresponding to the grid $i$ and is determined according to formula (5), $\gamma_{\min}$ is a signal-to-noise ratio threshold of the reference signal, $RS_i$ is reference signal strength of the grid $i$ and is determined by $P_c g_p^c$, and $RS_{\min}$ is a signal strength threshold of the reference signal:

$$\gamma_i^{RS} = \frac{P_c g_i^c}{P_{noise} + \sum_{d \neq c, d \in S} P_d g_i^d} \qquad (5)$$

wherein $P_{noise}$ is a noise power, $P_c$ is a transmit power of the base station $c$, $P_d$ is a transmit power of any base station $d$, different from the base station $c$, in the set $S$, and $g_i^c$ and $g_i^d$ are respectively a channel gain from the base station $c$ to the grid $i$ and a channel gain from the base station $d$ to the grid $i$; and determining that grids that enable the network capacity gain to be greater than 0 and the network coverage gain to be greater than 0 constitute the L second grids.

2. The method according to claim 1, wherein the determining the N first grids among the L second grids comprises:

   traversing the L second grids, and determining N third grids among the L second grids, such that a distance between any two third grids is greater than an interference distance threshold; and
   determining the N third grids as the N first grids if deploying one micro base station in each of the third grids brings the maximum network gain corresponding to the target region.

3. The method according to claim 2, wherein determining the interference distance threshold is as follows:

   determining interference between any two of the L second grids according to formula (6):

   $$I_{ij} = 1 - U_1\{l_i, l_j\}/(U_1(l_i) + U_1(l_j)) \qquad (6)$$

   wherein $l_i$ and $l_j$ are the any two second grids, $I_{ij}$ is the interference, $U_1\{l_i, l_j\}$ is a network capacity gain that is of the target network and that is obtained after one micro base station is deployed in each of the second grids $l_i$ and $l_j$ simultaneously, $U_1(l_i)$ is a network capacity gain that is of the target network and that is obtained after one micro base station is deployed in the second grid $l_i$, and $U_1(l_j)$ is a network capacity gain that is of the target network and that is obtained after one micro base station is deployed in the second grid $l_j$; and
   determining a distance between grids that enables the interference to be less than a preset interference threshold as the interference distance threshold.

4. The method according to any one of claims 1 to 3, after the determining that one micro base station is deployed in each of the N first grids, further comprising:

   by using each grid of the plurality of grids as a to-be-processed grid, determining first reference signal strength that is of the to-be-processed grid and that is obtained before one micro base station is deployed in each of the first grids, and second reference signal strength that is of the to-be-processed grid and that is obtained after one micro base station is deployed in each of the first grids; and
   if the second reference signal strength is greater than the first reference signal strength, determining the base station deployed in the to-be-processed grid as a to-be-adjusted base station, and adjusting a parameter of the to-be-adjusted base station;
   wherein the adjusting a parameter of the to-be-adjusted base station comprises at least one of the following:

      adjusting a transmit power of the to-be-adjusted base station according to a first preset step; or
      adjusting an antenna downtilt of the to-be-adjusted base station according to a second preset step.

5. A wireless network capacity expansion device, comprising:

   a division module, configured to perform grid division on a target region covered by a macro cellular network, to obtain a plurality of grids;
   a processing module, configured to determine N first grids among the plurality of grids, wherein deploying one micro base station in each of the first grids brings a maximum network gain corresponding to the target region, and N is an integer greater than 1; and
   a first determining module, configured to determine, according to the N first grids determined by the processing module, that one micro base station is deployed in each of the N first grids;
   **characterized in that** the processing module comprises:

      a first processing unit, configured to determine L second grids among the plurality of grids, wherein deploying one micro base station in each of the second grids increases a network gain corresponding to the target region, and L is an integer greater than N; and
      a second processing unit, configured to determine the N first grids among the L second grids;

   wherein the first processing unit comprises:

a first calculation subunit, configured to: successively for each grid of the plurality of grids, calculate, according to formula (1), a network capacity gain that is corresponding to the target region and that is obtained after one micro base station is deployed independently in each grid, and calculate, according to formula (2), a network coverage gain that is corresponding to the target region and that is obtained after one micro base station is deployed in each grid:

$$U_1(p) = Capacity(S \cup p) - Capacity(S) \qquad (1)$$

$$U_2(p) = Coverage(S \cup p) - Coverage(S) \qquad (2)$$

wherein $U_1(p)$ is the network capacity gain that is corresponding to the target region and that is obtained after one micro base station is deployed in any grid $p$ in the plurality of grids, $U_2(p)$ is the network coverage gain that is corresponding to the target region and that is obtained after one micro base station is deployed in any grid $p$ in the plurality of grids, $S$ is a set of macro base stations comprised in the target region, $Capacity(S)$ is a network capacity that is of the target region and that is obtained before a micro base station is deployed, and is determined according to formula (3), $Capacity(S \cup p)$ is a network capacity that is of the target region and that is obtained after one micro base station is deployed in the grid $p$, and is determined

according to $Capacity(S \cup p) = \sum_{c' \in (S \cup p)} T_{c'}$, $Coverage(S)$ is a network coverage area that is of the target region and that is obtained before a micro base station is deployed, and is determined according to formula (4), and $Coverage(S \cup p)$ is a network coverage area that is of the target region and that is obtained after one micro base station is deployed in the grid $p$, and is determined according to

$Coverage(S \cup p) = \sum_{c' \in (S \cup p)} F_{c'}$ :

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Coverage(S) = \sum_{c \in S} F_c = (\sum_{c \in S} \frac{\sum_{i \in c, RS_i > RS_{\min}} T_i}{\sum_{i \in c} T_i} + \sum_{c \in S} \frac{\sum_{i \in c, \gamma_i^{RS} > \gamma_{\min}} T_i}{\sum_{i \in c} T_i}) / 2 \qquad (4)$$

wherein $T_c$ is a network capacity corresponding to any base station $c$ in the set $S$, $F_c$ is a network coverage area of any base station $c$ in the set $S$, W is network bandwidth, $T_i$ is a traffic volume of any grid $i$ within the coverage area of the base station $c$, $\gamma_i^{RS}$ is a signal-to-noise ratio of a reference signal corresponding to the grid $i$ and is determined according to formula (5), $\gamma_{\min}$ is a signal-to-noise ratio threshold of the reference signal, $RS_i$ is reference signal strength of the grid $i$ and is determined by $P_c g_p^c$, and $RS_{\min}$ is a signal strength threshold of the reference signal:

$$\gamma_i^{RS} = \frac{P_c g_i^c}{P_{noise} + \sum_{d \neq c, d \in S} P_d g_i^d} \qquad (5)$$

wherein $P_{noise}$ is a noise power, $P_c$ is a transmit power of the base station $c$, $P_d$ is a transmit power of any base station $d$, different from the base station $c$, in the set $S$, and $g_i^c$ and $g_i^d$ are respectively a channel gain from the base station $c$ to the grid $i$ and a channel gain from the base station d to the grid $i$; and

a first determining subunit, configured to determine that grids that enable the network capacity gain to be greater than 0 and the network coverage gain to be greater than 0 constitute the L second grids.

6. The device according to claim 5, wherein the second processing unit comprises:

a selection subunit, configured to traverse the L second grids, and determine N third grids among the L second grids, such that a distance between any two third grids is greater than an interference distance threshold; and
a second determining subunit, configured to determine the N third grids as the N first grids if deploying one micro base station in each of the third grids brings the maximum network gain corresponding to the target region.

7. The device according to claim 6, wherein the selection subunit is further configured to:

determine interference between any two second grids in the L second grids according to formula (6):

$$I_{ij} = 1 - U_1\{l_i, l_j\}/(U_1(l_i) + U_1(l_j)) \qquad (6)$$

wherein $l_i$ and $l_j$ are the any two second grids, $I_{ij}$ is the interference, $U_1\{l_i, l_j\}$ is a network capacity gain that is of the target network and that is obtained after one micro base station is deployed in each of the second grids $l_i$ and $l_j$ simultaneously, $U_1(l_i)$ is a network capacity gain that is of the target network and that is obtained after one micro base station is deployed in the second grid $l_i$, and $U_1(l_j)$ is a network capacity gain that is of the target network and that is obtained after one micro base station is deployed in the second grid $l_j$; and
determine a distance between grids that enables the interference to be less than a preset interference threshold as the interference distance threshold.

8. The device according to any one of claims 5 to 7, further comprising:

a second determining module, configured to: by using each grid of the plurality of grids as a to-be-processed grid, determine first reference signal strength that is of the to-be-processed grid and that is obtained before one micro base station is deployed in each of the first grids, and second reference signal strength that is of the to-be-processed grid and that is obtained after one micro base station is deployed in each of the first grids; and
an adjustment module, configured to: if the second reference signal strength is greater than the first reference signal strength, determine the base station deployed in the to-be-processed grid as a to-be-adjusted base station, and adjust a parameter of the to-be-adjusted base station;
wherein the adjustment module is specifically configured to:
adjust a transmit power of the to-be-adjusted base station according to a first preset step; or adjust an antenna downtilt of the to-be-adjusted base station according to a second preset step.

9. A network device, comprising:
a memory and a processor connected to the memory, wherein the memory is configured to store a set of program code, and the processor is configured to invoke the program code stored in the memory to execute the method according to any one of claims 1 to 4.

**Patentansprüche**

1. Drahtlosnetzkapazitätserweiterungsverfahren, das Folgendes umfasst:

Durchführen einer Rasterunterteilung an einem Zielgebiet, das durch ein zellulares Makronetz abgedeckt wird, um mehrere Raster zu erhalten;
Bestimmen von N ersten Rastern unter den mehreren Rastern, wobei das Einsetzen einer Mikrobasisstation in jedem der ersten Raster eine maximale Netzverstärkung, die dem Zielgebiet entspricht, erzielt und N eine ganze Zahl größer als 1 ist; und
Bestimmen, dass eine Mikrobasisstation in jedem der N ersten Raster eingesetzt wird; **dadurch gekennzeich-**

**net, dass** das Bestimmen der N ersten Raster unter den mehreren Rastern Folgendes umfasst:

Bestimmen von L zweiten Rastern unter den mehreren Rastern, wobei das Einsetzen einer Mikrobasisstation in jedem der zweiten Raster eine Netzverstärkung, die dem Zielgebiet entspricht, erhöht und L eine ganze Zahl größer als N ist; und
Bestimmen der N ersten Raster unter den L zweiten Rastern;

wobei das Bestimmen der L zweiten Raster unter den mehreren Rastern Folgendes umfasst:
sukzessive für jedes Raster der mehreren Raster, Berechnen, gemäß Formel (1), eines Netzkapazitätszuwachses, der dem Zielgebiet entspricht und der erhalten wird, nachdem eine Basisstation unabhängig in jedem Raster eingesetzt wurde, und Berechnen, gemäß Formel (2), eines Netzabdeckungszuwachses, der dem Zielgebiet entspricht und der erhalten wird, nachdem eine Mikrobasisstation in jedem Raster eingesetzt wurde:

$$U_1(p) = Kapazität(S \cup p) - Kapazität(S) \qquad (1)$$

$$U_2(p) = Abdeckung(S \cup p) - Abdeckung(S) \qquad (2)$$

wobei $U_1(p)$ ein Netzkapazitätszuwachs ist, der dem Zielgebiet entspricht und der erhalten wird, nachdem eine Mikrobasisstation in einem beliebigen Raster $p$ in den mehreren Rastern eingesetzt wurde, $U_2(p)$ ein Netzabdeckungszuwachs ist, der dem Zielgebiet entspricht und der erhalten wird, nachdem eine Mikrobasisstation in einem beliebigen Raster $p$ in den mehreren Rastern eingesetzt wurde, $S$ ein Satz von Makrobasisstationen ist, die in dem Zielgebiet enthalten sind, $Kapazität(S)$ eine Netzkapazität ist, die von dem Zielgebiet stammt und die erhalten wird, bevor eine Mikrobasisstation eingesetzt wird, und gemäß Formel (3) bestimmt wird, $Kapazität(S \cup p)$ eine Netzkapazität ist, die von dem Zielgebiet stammt und die erhalten wird, nachdem eine Mikrobasisstation in dem Raster $p$ eingesetzt wurde, und gemäß $Kapazität(S \cup p) = \sum_{c' \in (S \cup p)} T_{c'}$ bestimmt wird, $Abdeckung(S)$ ein Netzabdeckungsbereich ist, der von dem Zielgebiet stammt und der erhalten wird, bevor eine Mikrobasisstation eingesetzt ist, und gemäß Formel (4) bestimmt wird, und $Abdeckung(S \cup p)$ ein Netzabdeckungsbereich ist, der von dem Zielgebiet stammt und der erhalten wird, nachdem eine Mikrobasisstation in dem Raster $p$ eingesetzt wurde, und gemäß $Abdeckung(S \cup p) = S_{c' \in (S \cup p)} F_{c'}$ bestimmt wird:

$$Kapazität(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Abdeckung(S) = \sum_{c \in S} F_c = \left( \sum_{c \in S} \frac{\sum_{i \in c, RS_i > RS_{min}} T_i}{\sum_{i \in c} T_i} + \sum_{c \in S} \frac{\sum_{i \in c, \gamma_i^{RS} > \gamma_{min}} T_i}{\sum_{i \in c} T_i} \right) / 2 \qquad (4)$$

wobei $T_c$ eine Netzkapazität ist, die einer beliebigen Basisstation c in dem Satz $S$ entspricht, $F_c$ ein Netzabdeckungsbereich der Basisstation $c$ in dem Satz $S$ ist, $W$ eine Netzbandbreite ist, $T_i$ ein Verkehrsvolumen eines beliebigen Rasters $i$ innerhalb des Abdeckungsbereichs der Basisstation $c$ ist, $\gamma_i^{RS}$ ein Signal-Rausch-Verhältnis eines Referenzsignals ist, das dem Raster $i$ entspricht und gemäß der Formel (5) bestimmt wird, $\gamma_{min}$ eine Signal-Rausch-Verhältnis-Schwelle des Referenzsignals ist, $RS_i$ eine Referenzsignalstärke des Rasters $i$ ist und durch $P_c g_p^c$ bestimmt wird und $RS_{min}$ eine Signalstärkenschwelle des Referenzsignals ist:

$$\gamma_i^{RS} = \frac{P_c g_i^c}{P_{Rauschen} + \sum_{d \neq c, d \in S} P_d g_i^d} \qquad (5)$$

wobei $P_{Rauschen}$ eine Rauschleistung ist, $P_c$ eine Sendeleistung der Basisstation $c$ ist, $P_d$ eine Sendeleistung einer beliebigen Basisstation $d$, die von der Basisstation $c$ verschieden ist, in dem Satz $S$ ist und $g_i^c$ und $g_i^d$ eine Kanalverstärkung von der Basisstation $c$ zu dem Raster $i$ bzw. eine Kanalverstärkung von der Basisstation *d* zu dem Raster *i* sind; und Bestimmen, dass Raster, die ermöglichen, dass der Netzkapazitätszuwachs größer als 0 ist und der Netzabdeckungszuwachs größer als 0 ist, die L zweiten Raster darstellen.

2. Verfahren nach Anspruch 1, wobei das Bestimmen der N ersten Raster unter den L zweiten Rastern Folgendes umfasst:

   Durchlaufen der L zweiten Raster und Bestimmen von N dritten Rastern unter den L zweiten Rastern, so dass eine Entfernung zwischen zwei beliebigen dritten Rastern größer als eine Störungsentfernungsschwelle ist; und Bestimmen der N dritten Raster als die N ersten Raster, falls das Einsetzen einer Mikrobasisstation in jedem der dritten Raster die maximale Netzverstärkung erzielt, die dem Zielgebiet entspricht.

3. Verfahren nach Anspruch 2, wobei das Bestimmen der Störungsentfernungsschwelle wie folgt ist:

   Bestimmen einer Störung zwischen zwei beliebigen der L zweiten Raster gemäß Formel (6):

$$I_{ij} = 1 - U_1\{l_i, l_j\}/(U_1(l_i) + U_1(l_j)) \qquad (6)$$

   wobei $l_i$ und $l_j$ die zwei beliebigen zweiten Raster sind, $I_{ij}$ die Störung ist, $U_1\{l_i, l_j\}$ ein Netzkapazitätszuwachs ist, der von dem Zielnetz stammt und der erhalten wird, nachdem eine Mikrobasisstation in jedem der zweiten Raster $l_i$ und $l_j$ gleichzeitig eingesetzt wurde, $U_1(l_i)$ ein Netzkapazitätszuwachs ist, der von dem Zielnetz stammt und der erhalten wird, nachdem eine Mikrobasisstation in dem zweiten Raster $l_i$ eingesetzt wurde, und $U_1(l_j)$ ein Netzkapazitätszuwachs ist, der von dem Zielnetz stammt und der erhalten wird, nachdem eine Mikrobasisstation in dem zweiten Raster $l_j$ eingesetzt wurde; und
   Bestimmen einer Entfernung zwischen Rastern, die ermöglicht, dass die Störung geringer als eine voreingestellte Störungsschwelle ist, als die Störungsentfernungsschwelle.

4. Verfahren nach einem der Ansprüche 1 bis 3, das nach dem Bestimmen, dass eine Mikrobasisstation in jedem der N ersten Raster eingesetzt wird, ferner Folgendes umfasst:

   durch Verwenden jedes Rasters der mehreren Raster als ein zu verarbeitendes Raster, Bestimmen einer ersten Referenzsignalstärke, die von dem zu verarbeitenden Raster stammt und die erhalten wird, bevor eine Mikrobasisstation in jedem der ersten Raster eingesetzt wird, und einer zweiten Referenzsignalstärke, die von dem zu verarbeitenden Raster stammt und die erhalten wird, nachdem eine Mikrobasisstation in jedem der ersten Raster eingesetzt wurde; und
   falls die zweite Referenzsignalstärke größer als die erste Referenzsignalstärke ist, Bestimmen der Basisstation, die in dem zu verarbeitenden Raster eingesetzt wird, als eine anzupassende Basisstation und Anpassen eines Parameters der anzupassenden Basisstation;
   wobei das Anpassen eines Parameters der anzupassenden Basisstation Folgendes umfasst:

   Anpassen einer Sendeleistung der anzupassenden Basisstation gemäß einem ersten voreingestellten Schritt; und/oder
   Anpassen einer Antennenabwärtsneigung der anzupassenden Basisstation gemäß einem zweiten voreingestellten Schritt.

5. Drahtlosnetzkapazitätserweiterungsvorrichtung, die Folgendes umfasst:

   ein Unterteilungsmodul, das zum Durchführen einer Rasterunterteilung an einem Zielgebiet konfiguriert ist, das durch ein zellulares Makronetz abgedeckt wird, um mehrere Raster zu erhalten;
   ein Verarbeitungsmodul, das zum Bestimmen von N ersten Rastern unter den mehreren Rastern konfiguriert ist, wobei das Einsetzen einer Mikrobasisstation in jedem der ersten Raster eine maximale Netzverstärkung, die dem Zielgebiet entspricht, erzielt und N eine ganze Zahl größer als 1 ist; und
   ein erstes Bestimmungsmodul, das zum Bestimmen gemäß den N ersten Rastern, die durch das Verarbeitungsmodul bestimmt werden, konfiguriert ist, dass eine Mikrobasisstation in jedem der N ersten Raster eingesetzt wird;
   **dadurch gekennzeichnet, dass** das Verarbeitungsmodul Folgendes umfasst:

eine erste Verarbeitungseinheit, die zum Bestimmen von L zweiten Rastern unter den mehreren Rastern konfiguriert ist, wobei das Einsetzen einer Mikrobasisstation in jedem der zweiten Raster eine Netzverstärkung, die dem Zielgebiet entspricht, erhöht und L eine ganze Zahl größer als N ist; und

eine zweite Verarbeitungseinheit, die zum Bestimmen der N ersten Raster unter den L zweiten Rastern konfiguriert ist;

wobei die erste Verarbeitungseinheit Folgendes umfasst:

eine erste Berechnungsuntereinheit, die zu Folgendem konfiguriert ist: sukzessive für jedes Raster der mehreren Raster, Berechnen, gemäß Formel (1), eines Netzkapazitätszuwachses, der dem Zielgebiet entspricht und der erhalten wird, nachdem eine Mikrobasisstation unabhängig in jedem Raster eingesetzt wurde, und Berechnen, gemäß Formel (2), eines Netzabdeckungszuwachses, der dem Zielgebiet entspricht und der erhalten wird, nachdem eine Mikrobasisstation in jedem Raster eingesetzt wurde:

$$U_1(p) = Kapazität(S \cup p) - Kapazität(S) \tag{1}$$

$$U_2(p) = Abdeckung(S \cup p) - Abdeckung(S) \tag{2}$$

wobei $U_1(p)$ ein Netzkapazitätszuwachs ist, der dem Zielgebiet entspricht und der erhalten wird, nachdem eine Mikrobasisstation in einem beliebigen Raster $p$ in den mehreren Rastern eingesetzt wurde, $U_2(p)$ ein Netzabdeckungszuwachs ist, der dem Zielgebiet entspricht und der erhalten wird, nachdem eine Mikrobasisstation in einem beliebigen Raster $p$ in den mehreren Rastern eingesetzt wurde, $S$ ein Satz von Makrobasisstationen ist, die in dem Zielgebiet enthalten sind, $Kapazität(S)$ eine Netzkapazität ist, die von dem Zielgebiet stammt und die erhalten wird, bevor eine Mikrobasisstation eingesetzt wird, und gemäß Formel (3) bestimmt wird, $Kapazität(S \cup p)$ eine Netzkapazität ist, die von dem Zielgebiet stammt und die erhalten wird, nachdem eine Mikrobasisstation in dem Raster p eingesetzt wurde, und gemäß $Kapazität(S \cup p) = \sum_{c' \in (S \cup p)} T_{c'}$ bestimmt wird, $Abdeckung(S)$ ein Netzabdeckungsbereich ist, der von dem Zielgebiet stammt und der erhalten wird, bevor eine Mikrobasisstation eingesetzt ist, und gemäß Formel (4) bestimmt wird, und $Abdeckung(S \cup p)$ ein Netzabdeckungsbereich ist, der von dem Zielgebiet stammt und der erhalten wird, nachdem eine Mikrobasisstation in dem Raster $p$ eingesetzt wurde, und gemäß $Abdeckung(S \cup p) = \sum_{c' \in (S \cup p)} F_{c'}$ bestimmt wird:

$$Kapazität(S) = \sum_{c \in S} T_c = \sum_{c \in S} \frac{W \sum_{i \in c} T_i}{\sum_{i \in c} T_i log_2^{-1}(1+\gamma_i^{RS})} \tag{3}$$

$$Abdeckung(S) = \sum_{c \in S} F_c = (\sum_{c \in S} \frac{\sum_{i \in c, RS_i > RS_{min}} T_i}{\sum_{i \in c} T_i} + \sum_{c \in S} \frac{\sum_{i \in c, \gamma_i^{RS} > \gamma_{min}} T_i}{\sum_{i \in c} T_i})/2 \tag{4}$$

wobei $T_c$ eine Netzkapazität ist, die einer beliebigen Basisstation $c$ in dem Satz $S$ entspricht, $F_c$ ein Netzabdeckungsbereich einer beliebigen Basisstation $c$ in dem Satz $S$ ist, $W$ eine Netzbandbreite ist, $T_i$ ein Verkehrsvolumen eines beliebigen Rasters $i$ innerhalb des Abdeckungsbereichs der Basisstation $c$ ist, $\gamma_i^{RS}$ ein Signal-Rausch-Verhältnis eines Referenzsignals ist, das dem Raster $i$ entspricht und gemäß der Formel (5) bestimmt wird, $\gamma_{min}$ eine Signal-Rausch-Verhältnis-Schwelle des Referenzsignals ist, $RS_i$ eine Referenzsignalstärke des Rasters $i$ ist und durch $P_c g_p^c$ bestimmt wird und $RS_{min}$ eine Signalstärkenschwelle des Referenzsignals ist:

$$\gamma_i^{RS} = \frac{P_c g_i^c}{P_{Rauschen} + \sum_{d \neq c, d \in S} P_d g_i^d} \tag{5}$$

wobei $P_{Rauschen}$ eine Rauschleistung ist, $P_c$ eine Sendeleistung der Basisstation $c$ ist, $P_d$ eine Sendeleistung einer beliebigen Basisstation $d$, die von der Basisstation $c$ verschieden ist, in dem Satz $S$ ist und $g_i^c$ und $g_i^d$ eine Kanalverstärkung von der Basisstation $c$ zu dem Raster $i$ bzw. eine Kanalverstärkung von der Basisstation $d$ zu dem Raster $i$ sind; und

eine erste Bestimmungsuntereinheit, die zum Bestimmen konfiguriert ist, dass Raster, die ermöglichen, dass der Netzkapazitätszuwachs größer als 0 ist und der Netzabdeckungszuwachs größer als 0 ist, die L zweiten Raster darstellen.

6. Vorrichtung nach Anspruch 5, wobei die zweite Verarbeitungseinheit Folgendes umfasst:

eine Auswahluntereinheit, die zum Durchlaufen der L zweiten Raster und zum Bestimmen von N dritten Rastern unter den L zweiten Rastern konfiguriert ist, so dass eine Entfernung zwischen zwei beliebigen dritten Rastern größer als eine Störungsentfernungsschwelle ist; und
eine zweite Bestimmungsuntereinheit die zum Bestimmen der N dritten Raster als die N ersten Raster konfiguriert ist, falls das Einsetzen einer Mikrobasisstation in jedem der dritten Raster die maximale Netzverstärkung erzielt, die dem Zielgebiet entspricht.

7. Vorrichtung nach Anspruch 6, wobei die Auswahluntereinheit ferner zu Folgendem konfiguriert ist:

Bestimmen einer Störung zwischen zwei beliebigen zweiten Rastern der L zweiten Raster gemäß Formel (6):

$$I_{ij} = 1 - U_1\{l_i, l_j\}/(U_1(l_i) + U_1(l_j)) \tag{6}$$

wobei $l_i$ und $l_j$ die zwei beliebigen zweiten Raster sind, $I_{ij}$ die Störung ist, $U_1\{l_i,l_j\}$ ein Netzkapazitätszuwachs ist, der von dem Zielnetz stammt und der erhalten wird, nachdem eine Mikrobasisstation in jedem der zweiten Raster $l_i$ und $l_j$ gleichzeitig eingesetzt wurde, $U_1(l_i)$ ein Netzkapazitätszuwachs ist, der von dem Zielnetz stammt und der erhalten wird, nachdem eine Mikrobasisstation in dem zweiten Raster $l_i$ eingesetzt wurde, und $U_1(l_j)$ ein Netzkapazitätszuwachs ist, der von dem Zielnetz stammt und der erhalten wird, nachdem eine Mikrobasisstation in dem zweiten Raster $l_j$ eingesetzt wurde; und
Bestimmen einer Entfernung zwischen Rastern, die ermöglicht, dass die Störung geringer als eine voreingestellte Störungsschwelle ist, als die Störungsentfernungsschwelle.

8. Vorrichtung nach einem der Ansprüche 5 bis 7, die ferner Folgendes umfasst:

ein zweites Bestimmungsmodul, das zu Folgendem konfiguriert ist: durch Verwenden jedes Rasters der mehreren Raster als ein zu verarbeitendes Raster, Bestimmen einer ersten Referenzsignalstärke, die von dem zu verarbeitenden Raster stammt und die erhalten wird, bevor eine Mikrobasisstation in jedem der ersten Raster eingesetzt wird, und einer zweiten Referenzsignalstärke, die von dem zu verarbeitenden Raster stammt und die erhalten wird, nachdem eine Mikrobasisstation in jedem der ersten Raster eingesetzt wurde; und
ein Anpassungsmodul, das zu Folgendem konfiguriert ist: falls die zweite Referenzsignalstärke größer als die erste Referenzsignalstärke ist, Bestimmen der Basisstation, die in dem zu verarbeitenden Raster eingesetzt wird, als eine anzupassende Basisstation und Anpassen eines Parameters der anzupassenden Basisstation;
wobei das Anpassungsmodul speziell zu Folgendem konfiguriert ist:
Anpassen einer Sendeleistung der anzupassenden Basisstation gemäß einem ersten voreingestellten Schritt; oder Anpassen einer Antennenabwärtsneigung der anzupassenden Basisstation gemäß einem zweiten voreingestellten Schritt.

9. Netzvorrichtung, die Folgendes umfasst:
einen Speicher und einen Prozessor, der mit dem Speicher verbunden ist, wobei der Speicher zum Speichern eines Satzes von Programmcode konfiguriert ist und der Prozessor zum Aufrufen des in dem Speicher gespeicherten Programmcodes konfiguriert ist, um das Verfahren nach einem der Ansprüche 1 bis 4 auszuführen.

**Revendications**

1. Procédé d'extension de capacité de réseau sans fil, comprenant de :

effectuer une division de grille sur une région cible couverte par un macro réseau cellulaire, pour obtenir une pluralité de grilles ;
déterminer N premières grilles parmi la pluralité de grilles, dans lequel le déploiement d'une micro station de base dans chacune des premières grilles apporte un gain de réseau maximum correspondant à la région cible, et N est un nombre entier supérieur à 1 ; et

déterminer qu'une micro station de base est déployée dans chacune des N premières grilles ;

**caractérisé en ce que** la détermination des N premières grilles parmi la pluralité de grilles comprend de :

déterminer L deuxièmes grilles parmi la pluralité de grilles, dans lequel le déploiement d'une micro station de base dans chacune des deuxièmes grilles augmente un gain de réseau correspondant à la région cible, et L est un nombre entier supérieur à N ; et

déterminer les N premières grilles parmi les L deuxièmes grilles ;

dans lequel la détermination des L deuxièmes grilles parmi la pluralité de grilles comprend de :
successivement pour chaque grille de la pluralité de grilles, calculer, selon la formule (1), un gain de capacité de réseau qui correspond à la région cible et qui est obtenu après qu'une micro station de base est déployée de façon indépendante dans chaque grille, et calculer, selon la formule (2), un gain de couverture de réseau qui correspond à la région cible et qui est obtenu après qu'une micro station de base est déployée dans chaque grille :

$$U_1(p) = Capacity(S \cup p) - \text{Capacity}(S) \qquad (1)$$

$$U_2(p) = Coverage(S \cup p) - Coverage(S) \qquad (2)$$

où $U_1(P)$ est un gain de capacité de réseau qui correspond à la région cible et qui est obtenu après qu'une micro station de base est déployée dans une grille quelconque $p$ de la pluralité de grilles, $U_2(P)$ est un gain de couverture de réseau qui correspond à la région cible et qui est obtenu après qu'une micro station de base est déployée dans une grille quelconque $p$ de la pluralité de grilles, $S$ est un ensemble de macro stations de base comprises dans la région cible, $Capacity(S)$ est une capacité de réseau qui est de la région cible et qui est obtenue avant qu'une micro station de base soit déployée, et est déterminée selon la formule (3), $Capacity(S \cup p)$ est une capacité de réseau qui est de la région cible et qui est obtenue après qu'une micro station de base est déployée dans la grille $p$, et est déterminée selon $Capacity(S \cup p) = \sum_{c' \in (S \cup p)} T_{c'}$ $Coverage(S)$ est une zone de couverture de réseau qui est de la région cible et qui est obtenue avant qu'une micro station de base soit déployée, et est déterminée selon la formule (4), et $Coverage(S \cup p)$ est une zone de couverture de réseau qui est de la région cible et qui est obtenue après qu'une micro station de base est déployée dans la grille $p$,

et est déterminée selon $Coverage(S \cup p) = \sum_{c' \in (S \cup p)} F_{c'}$ :

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Coverage(S) = \sum_{c \in S} F_c = (\sum_{c \in S} \frac{\sum_{i \in c, RS_i > RS_{\min}} T_i}{\sum_{i \in c} T_i} + \sum_{c \in S} \frac{\sum_{i \in c, \gamma_i^{RS} > \gamma_{\min}} T_i}{\sum_{i \in c} T_i}) / 2 \qquad (4)$$

où $T_c$ est une capacité de réseau correspondant à une quelconque station de base $c$ dans l'ensemble $S$, $F_c$ est une zone de couverture de réseau de la station de base $c$ dans l'ensemble $S$, $W$ est une bande passante de réseau, $T_i$ est un volume de trafic de toute grille $i$ dans la zone de couverture de la station de base $c$, $\gamma_i^{RS}$ est

un rapport signal sur bruit d'un signal de référence correspondant à la grille *i* et est déterminé selon la formule (5), $\gamma_{min}$ est un seuil de rapport signal sur bruit du signal de référence, $RS_i$ est la force du signal de référence de la grille *i* et est déterminée par $P_c g_p^c$, et $RS_{min}$ est un seuil de force de signal du signal de référence :

$$\gamma_i^{RS} = \frac{P_c g_i^c}{P_{noise} + \sum_{d \neq c, d \in S} P_d g_i^d} \tag{5}$$

où $P_{noise}$ est une puissance du bruit, $P_c$ est une puissance d'émission de la station de base *c*, $P_d$ est une puissance d'émission d'une quelconque station de base *d*, différente de la station de base *c*, dans l'ensemble *S*, et $g_i^c$ et $g_i^d$ sont respectivement un gain de canal de la station de base c à la grille *i* et un gain de canal de la station de base *d* à la grille *i* ; et
déterminer que des grilles qui permettent au gain de capacité de réseau d'être supérieur à 0 et au gain de couverture de réseau d'être supérieur à 0 constituent les L deuxièmes grilles.

2. Procédé selon la revendication 1, dans lequel la détermination des N premières grilles parmi les L deuxièmes grilles comprend de :

traverser les L deuxièmes grilles, et déterminer N troisièmes grilles parmi les L deuxièmes grilles, de sorte qu'une distance entre deux troisièmes grilles quelconques est supérieure à un seuil de distance de brouillage ; et déterminer les N troisièmes grilles en tant que les N premières grilles si le déploiement d'une micro station de base dans chacune des troisièmes grilles apporte le gain de réseau maximum correspondant à la région cible.

3. Procédé selon la revendication 2, dans lequel la détermination du seuil de distance de brouillage consiste à :

déterminer un brouillage entre deux grilles quelconques des L deuxièmes grilles selon la formule (6) :

$$Iij = 1 - U1\{li, lj\} / (U1(li) + U1(lj)) \tag{6}$$

où li et lj sont les deux deuxièmes grilles quelconques, lij est le brouillage, U1{li, lj} est un gain de capacité de réseau qui est du réseau cible et qui est obtenu après qu'une micro station de base est déployée dans chacune des deuxièmes grilles li et lj simultanément, (U1(li) est un gain de capacité de réseau qui est du réseau cible et qui est obtenu après qu'une micro station de base est déployée dans la deuxième grille li, et U1(lj) est un gain de capacité de réseau qui est du réseau cible et qui est obtenu après qu'une micro station de base est déployée dans la deuxième grille lj ; et
déterminer une distance entre des grilles qui permet au brouillage d'être inférieur à un seuil de brouillage prédéfini en tant que le seuil de distance de brouillage.

4. Procédé selon l'une quelconque des revendications 1 à 3, après la détermination du fait qu'une micro station de base est déployée dans chacune des N premières grilles, comprenant en outre de :

en utilisant chaque grille de la pluralité de grilles en tant que grille à traiter, déterminer une première force de signal de référence qui est de la grille à traiter et qui est obtenue avant qu'une micro station de base soit déployée dans chacune des premières grilles, et une deuxième force de signal de référence qui est de la grille à traiter et qui est obtenue après qu'une micro station de base est déployée dans chacune des premières grilles ; et si la deuxième force de signal de référence est supérieure à la première force de signal de référence, déterminer la station de base déployée dans la grille à traiter en tant que station de base à régler, et régler un paramètre de la station de base à régler ;
dans lequel le réglage d'un paramètre de la station de base à régler comprend au moins l'un parmi :

régler une puissance d'émission de la station de base à régler selon une première étape prédéfinie ; ou régler une inclinaison vers le bas de l'antenne de la station de base à régler selon une deuxième étape prédéfinie.

**5.** Dispositif d'extension de capacité de réseau sans fil, comprenant :

un module de division, configuré pour effectuer une division de grille sur une région cible couverte par un macro réseau cellulaire, pour obtenir une pluralité de grilles ;

un module de traitement, configuré pour déterminer N premières grilles parmi la pluralité de grilles, dans lequel le déploiement d'une micro station de base dans chacune des premières grilles apporte un gain de réseau maximum correspondant à la région cible, et N est un nombre entier supérieur à 1 ; et

un premier module de détermination, configuré pour déterminer, en fonction des N premières grilles déterminées par le module de traitement, qu'une micro station de base est déployée dans chacune des N premières grilles ; **caractérisé en ce que** le module de traitement comprend :

une première unité de traitement, configurée pour déterminer L deuxièmes grilles parmi la pluralité de grilles, dans lequel le déploiement d'une micro station de base dans chacune des deuxièmes grilles augmente un gain de réseau correspondant à la région cible, et L est un nombre entier supérieur à N ; et

une deuxième unité de traitement, configurée pour déterminer les N premières grilles parmi les L deuxièmes grilles ;

dans lequel la première unité de traitement comprend :

une première sous-unité de calcul, configurée pour : successivement pour chaque grille de la pluralité de grilles, calculer, selon la formule (1), un gain de capacité de réseau qui correspond à la région cible et qui est obtenu après qu'une micro station de base est déployée de façon indépendante dans chaque grille, et calculer, selon la formule (2), un gain de couverture de réseau qui correspond à la région cible et qui est obtenu après qu'une micro station de base est déployée dans chaque grille :

$$U1(p) = \text{Capacity}(S \cup p) — \text{Capacity}(S) \qquad (1)$$

$$U2(p) = \text{Coverage}(S \cup p) — \text{Coverage}(S) \qquad (2)$$

où U1(P) est un gain de capacité de réseau qui correspond à la région cible et qui est obtenu après qu'une micro station de base est déployée dans une grille quelconque p de la pluralité de grilles, U2(P) est un gain de couverture de réseau qui correspond à la région cible et qui est obtenu après qu'une micro station de base est déployée dans une grille quelconque p de la pluralité de grilles, S est un ensemble de macro stations de base comprises dans la région cible, Capacity(S) est une capacité de réseau qui est de la région cible et qui est obtenue avant qu'une micro station de base soit déployée, et est déterminée selon la formule (3), Capacity(S $\cup$ p) est une capacité de réseau qui est de la région cible et qui est obtenue après qu'une micro station de base est déployée dans la grille p, et est déterminée selon $Capacity(S \cup p) = \sum_{c' \in (S \cup p)} T_{c'}$, Coverage(S) est une zone de couverture de réseau qui est de la région cible et qui est obtenue avant qu'une micro station de base soit déployée, et est déterminée selon la formule (4), et Coverage(S $\cup$ p) est une zone de couverture de réseau qui est de la région cible et qui est obtenue après qu'une micro station de base est déployée dans la grille p, et est déterminée selon $Coverage(S \cup p) = \sum_{c' \in (S \cup p)} F_{c'}$ :

$$Capacity(S) = \sum_{c \in S} T_c = \sum_{c \in S} \frac{W \sum_{i \in c} T_i}{\sum_{i \in c} T_i \log_2^{-1}(1 + \gamma_i^{RS})} \qquad (3)$$

$$Coverage(S) = \sum_{c \in S} F_c = (\sum_{c \in S} \frac{\sum_{i \in c, RS_i > RS_{min}} T_i}{\sum_{i \in c} T_i} + \sum_{c \in S} \frac{\sum_{i \in c, \gamma_i^{RS} > \gamma_{min}} T_i}{\sum_{i \in c} T_i})/2$$

$$(4)$$

où Tc est une capacité de réseau correspondant à une quelconque station de base c dans l'ensemble S, Fc est une zone de couverture de réseau d'une quelconque station de base c dans l'ensemble S, W est une bande passante de réseau, $T_i$ est un volume de trafic de toute grille *i* dans la zone de couverture de la station de base c, $\gamma_i^{RS}$ est un rapport signal sur bruit d'un signal de référence correspondant à la grille *i* et est déterminé selon la formule (5), $\gamma_{min}$ est un seuil de rapport signal sur bruit du signal de référence, $RS_i$ est la force du signal de référence de la grille *i* et est déterminée par $P_c g_p^c$, et $RS_{min}$ est un seuil de force de signal du signal de référence :

$$\gamma_i^{RS} = \frac{P_c g_i^c}{P_{noise} + \sum_{d \neq c, d \in S} P_d g_i^d}$$

$$(5)$$

où $P_{noise}$ est une puissance du bruit, $P_c$ est une puissance d'émission de la station de base c, $P_d$ est une puissance d'émission d'une quelconque station de base d, différente de la station de base c, dans l'ensemble S, et $g_i^c$ et $g_i^d$ sont respectivement un gain de canal de la station de base c à la grille *i* et un gain de canal de la station de base d à la grille *i* ; et
une première sous-unité de détermination, configurée pour déterminer que des grilles qui permettent au gain de capacité de réseau d'être supérieur à 0 et au gain de couverture de réseau d'être supérieur à 0 constituent les L secondes grilles.

6. Dispositif selon la revendication 5, dans lequel la deuxième unité de traitement comprend :

   une sous-unité de sélection, configurée pour traverser les L deuxièmes grilles, et déterminer N troisièmes grilles parmi les L deuxièmes grilles, de sorte qu'une distance entre deux troisièmes grilles quelconques est supérieure à un seuil de distance de brouillage ; et
   une deuxième sous-unité de détermination, configurée pour déterminer les N troisièmes grilles en tant que les N premières grilles si le déploiement d'une micro station de base dans chacune des troisièmes grilles apporte le gain de réseau maximum correspondant à la région cible.

7. Dispositif selon la revendication 6, dans lequel la sous-unité de sélection est en outre configurée pour :

   déterminer un brouillage entre deux deuxièmes grilles quelconques dans les L deuxièmes grilles selon la formule (6) :

$$Iij = 1 - U1\{li, lj\} / (U1(li) + U1(lj)) \quad (6)$$

   où li et lj sont les deux deuxièmes grilles quelconques, Iij est le brouillage, U1{li, lj} est un gain de capacité de réseau qui est du réseau cible et qui est obtenu après qu'une micro station de base est déployée dans chacune des deuxièmes grilles li et lj simultanément, (U1(li) est un gain de capacité de réseau qui est du réseau cible et qui est obtenu après qu'une micro station de base est déployée dans la deuxième grille li, et U1(lj) est un gain de capacité de réseau qui est du réseau cible et qui est obtenu après qu'une micro station de base est déployée dans la deuxième grille lj ; et
   déterminer une distance entre des grilles qui permet au brouillage d'être inférieur à un seuil de brouillage prédéfini en tant que le seuil de distance de brouillage.

8. Dispositif selon l'une quelconque des revendications 5 à 7, comprenant en outre :

un deuxième module de détermination, configuré pour : en utilisant chaque grille de la pluralité de grilles en tant que grille à traiter, déterminer une première force de signal de référence qui est de la grille à traiter et qui est obtenue avant qu'une micro station de base soit déployée dans chacune des premières grilles, et une deuxième force de signal de référence qui est de la grille à traiter et qui est obtenue après qu'une micro station de base est déployée dans chacune des premières grilles ; et

un module de réglage, configuré pour : si la deuxième force de signal de référence est supérieure à la première force de signal de référence, déterminer la station de base déployée dans la grille à traiter en tant que station de base à régler, et régler un paramètre de la station de base à régler ;

dans lequel le module de réglage est spécifiquement configuré pour :

régler une puissance d'émission de la station de base à régler selon une première étape prédéfinie ; ou régler une inclinaison vers le bas de l'antenne de la station de base à régler selon une deuxième étape prédéfinie.

9. Dispositif de réseau, comprenant :

une mémoire et un processeur connecté à la mémoire, dans lequel la mémoire est configurée pour stocker un jeu de code de programme, et le processeur est configuré pour invoquer le code de programme stocké dans la mémoire pour exécuter le procédé selon l'une quelconque des revendications 1 à 4.

Perform grid division on a target region covered by a macro cellular network, to obtain a plurality of grids ⟋ 101

Determine N first grids among the plurality of grids, where deploying one micro base station in each of the first grids brings a maximum network gain corresponding to the target region, and N is an integer greater than 1 ⟋ 102

Determine that one micro base station is deployed in each grid of the N first grids ⟋ 103

FIG. 1

Perform grid division on a target region covered by a macro cellular network, to obtain a plurality of grids — 201

Successively for each grid of the plurality of grids, calculate, according to formula (1), a network capacity gain that is corresponding to the target region and that is obtained after one micro base station is deployed independently in each grid, and calculate, according to formula (2), a network coverage gain that is corresponding to the target region and that is obtained after one micro base station is deployed in each grid — 202

Determine that grids that enable the network capacity gain to be greater than 0 and the network coverage gain to be greater than 0 constitute L second grids — 203

Traverse the L second grids, and determine N third grids among the L second grids, where a distance between any two third grids is greater than an interference distance threshold — 204

If deploying one micro base station in each of the third grids brings a maximum network gain corresponding to the target region, determine the N third grids as N first grids — 205

By using each grid of the plurality of grids as a to-be-processed grid, determine first reference signal strength that is of the to-be-processed grid and that is obtained before one micro base station is deployed in each first grid, and second reference signal strength that is of the to-be-processed grid and that is obtained after one micro base station is deployed in each first grid — 206

If the second reference signal strength is greater than the first reference signal strength, determine a base station corresponding to the to-be-processed grid as a to-be-adjusted base station, and adjust a parameter of the to-be-adjusted base station — 207

FIG. 2

Randomly sort L second grids, and initialize a set M and a set C to be empty — 301

No — 314

k>K — 314

Does a next second grid p exist — 302

No

Yes

k=k+1 — 313

Yes

Is the grid p in the set M — 303

Yes

No

Obtain at least one group of N first grids — 315

Search the M for a grid whose a distance to the p is less than an interference distance threshold R, and put the grid in the C — 304

Is the set C empty — 305

Yes

No

Is a size of the set M less than N — 309

Is a gain of the C less than that of the grid p — 306

Yes

No

No

Search the M for a grid q with a smallest gain — 310

Delete a grid that is in the C from the M — 307

Is a gain of the grid q less than that of the grid p — 311

Add the grid p to the M — 308

No

Yes

Delete the grid q from the M — 312

FIG. 3

EP 3 148 241 B1

Division module 11

Processing module 12

First determining module 13

FIG. 4

Division module 11

12

First calculation subunit 1211

First determining subunit 1212

First determining module 13

Selection subunit 1221

Second determining module 21

Second determining subunit 1222

Adjustment module 22

121

122

FIG. 5

28

Network device

Processor  32

Memory  31

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130040648 A1